# EUROPEAN PATENT SPECIFICATION

(11) **EP 3 509 077 B1**
(45) Date of publication and mention of the grant of the patent: **04.11.2020**
(21) Application number: 17860593.7
(22) Date of filing: 20.09.2017
(51) Int. Cl.: H01F 27/28, H01F 5/02, H01F 3/14, H01F 27/32, H01F 27/34, H01F 30/10, H02M 3/28

(54) **TRANSFORMER AND POWER CONVERTER PROVIDED WITH SAME**
TRANSFORMATOR UND STROMWANDLER MIT SELBIGEM
TRANSFORMATEUR ET CONVERTISSEUR DE PUISSANCE ÉQUIPÉ DE CELUI-CI

(30) Priority: 12.10.2016 JP 2016200694
(43) Date of publication of application: 10.07.2019
(73) Proprietor: Omron Corporation, Kyoto-shi, Kyoto 600-8530 (JP)
(72) Inventor: NISHIKAWA, Takeo, Kyoto-shi Kyoto 600-8530 (JP); YOKOI, Toshiyuki, Kyoto-shi Kyoto 600-8530 (JP); TAWARAGI, Takayoshi, Kyoto-shi Kyoto 600-8530 (JP)
(74) Representative: Horn Kleimann Waitzhofer Patentanwälte PartG mbB
(86) International application number: PCT/JP2017/033990
(87) International publication number: WO 2018/070198

(56) References cited:
- EP-A2- 1 329 914
- JP-A- H02 178 905
- JP-A- H02 178 905
- JP-A- 2013 062 399
- JP-A- 2016 005 004
- JP-B1- S4 226 487
- JP-U- H0 727 135
- JP-U- S59 155 710
- US-A1- 2013 063 240

## Description

### [Technical Field]

The present invention relates to a transformer and a power converter equipped with the same. In particular, the present invention relates to a transformer that has a suitable winding wire structure for a power converter such as an insulated converter, and a power converter equipped with such a transformer.

### [Background Art]

LLC resonant converters have been available as high-efficiency insulated converters. Recently, the LLC is often applied to converters (such as photovoltaic power conditioners) that need to operate under wide voltage variations. A converter for operating in a wide input-output voltage range requires a large magnetizing current at the LLC. To increase the magnetizing current, a transformer needs to decrease the magnetizing inductance, which increases a gap in the transformer.

A prior art technology has suggested a transformer that has a low leakage inductance, that can inhibit a surge voltage, and that can reduce noise (see PTL 1, for example).

Another prior art technology has suggested a transformer that decreases an eddy current loss and that reduces heat generation (see PTL 2, for example).

JP H02 178905 A discloses primary windings and a secondary winding which are wound around a coil bobbin alternately one layer at a time through insulating material, and further the thickness of each layer of the primary windings and the secondary winding is made below 0.4mm and the widths of windings are made the same. The primary windings are divided into two windings in parallel and both ends of these divided primary windings are so constituted that they become parallel connection at P1 and P2 parts. In this case all the parts from the beginnings of the winding to the ends are opposed surely, and it becomes possible to increase the facing area to be many times larger, and the distance between the primary windings and the secondary winding becomes small.

US 2013/063240 A1 discloses a transformer which includes: a core portion, which forms a magnetic circuit; a coil bobbin, which has a winding core portion to be wound by a winding wire, and which is attached on the core portion; a primary winding wire, which has a plurality of first divided winding wire portions divided in parallel; and a secondary winding wire, which has a plurality of second divided winding wire portions divided in parallel, wherein the plurality of first divided winding wire portions and the plurality of second divided winding wire portions are layered on the winding core portion, wherein at least one of the first divided winding wire portions becomes a first layer which is closest to the winding core portion, and at least one of the other of the first divided winding wire portions is interposed between two of the second divided winding wire portions.

JP S59 155710 U discloses a transformer with a winding structure.

EP 1 329 914 A2 discloses an energy transfer element having an energy transfer element input winding and an energy transfer element output winding. The energy transfer element input winding may be capacitively coupled to the energy transfer element output winding. The energy transfer element is capacitively coupled to electrical earth.

### [Citation List]

### [Patent Literature]

[PTL 1] JP 2013-62399 A
[PTL 2] JP 2010-232272 A

### [Summary of Invention]

### [Technical Problem]

In the winding wire structure of the transformer disclosed in PTL 1, layers of each winding wire are laminated and connected in parallel. This structure has a problem if the transformer has a large core gap. Specifically, leakage flux from the gap disturbs uniformity of the electric current in the parallel winding wires, and causes abnormal heat generation in a part of the winding wires.

The transformer disclosed in PTL 2 requires two core gaps that are positioned to cancel out their leakage flux by magnetic interference.

In view of these conventional problems, the present invention intends to provide a transformer that does not require core gaps at two positions, that can prevent abnormal heat generation due to leakage flux from a core gap by a simple configuration, and also intends to provide a power converter equipped with such a transformer.

### [Solution to Problem]

To achieve the above object, the present invention provides a transformer according to present claim 1. As an example, take the case where the core has two outer legs and a middle leg. If the middle leg has an air gap, the first layer of the primary winding wire is the innermost winding wire layer on the bobbin. If each of the two outer legs has an air gap, the first layer of the primary winding wire is the outermost winding wire layer on the bobbin.

Even if the leakage flux from the air gap interlinks with the magnetic flux of the primary winding wire and the secondary winding wire, the thus configured transformer does not generate a loop current, and eventually prevents abnormal heat generation in the winding wires.

If the thus configured transformer has a greater number of laminated layers, the coupling coefficient gets greater, and the leakage inductance gets lower. In this context, the coupling coefficient indicates the degree of coupling between the primary winding wire and the secondary winding wire in the transformer.

In particular due to the features specified in the characterising part of present claim 1 the transformer can further increase the coupling coefficient of the transformer while reducing the influence of the leakage flux from the air gap.

In the transformer according to the present invention, the bobbin is preferably provided with a winding wire holder configured to hold a series connecting wire for connecting the layers of the primary winding wire in series or connecting the layers of the secondary winding wire in series.

The thus configured transformer can omit a step for soldering or otherwise connecting the layers of separate winding wires in series, and can thereby reduce the number of production steps and save the space for production.

Preferably, in the transformer according to the present invention, an inlet wire and an outlet wire that connect the layers of the primary winding wire are positioned apart from an inlet wire and an outlet wire that connect the layers of the secondary winding wire.

The thus configured transformer can prevent dielectric breakdown across the primary winding wire and the secondary winding wire.

The present invention further encompasses a power converter equipped with the transformer having any of the above configurations.

### [Advantageous Effects of Invention]

Even if the leakage flux from the air gap interlinks with the magnetic flux of the first winding wire and the second winding wire, the transformer according to the present invention does not generate a loop current, and eventually prevents abnormal heat generation in the winding wires.

The power converter equipped with the transformer according to the present invention can operate in a wide input-output voltage range.

### [Brief Description of Drawings]

Fig. 1 is a sectional view showing an overall configuration of a transformer 1 according to First Embodiment
Fig. 2 is a sectional view showing a winding wire part 30 of the transformer 1 in detail.
Fig. 3 is a sectional view showing electrical connections between layers of a first winding wire 31 and layers of a second winding wire 32 in the transformer 1.
Fig. 4 is a sectional view showing electrical connections between layers of a first winding wire 31 and layers of a second winding wire 32 in a conventional transformer 101.
Fig. 5 is a sectional view showing an example of leakage flux Φ from a gap 11 in the transformer 1.
Fig. 6 is a sectional view showing an example of an influence by leakage flux Φ in the conventional transformer 101.
Fig. 7 is a sectional view showing an example of an influence by the leakage flux Φ in the transformer 1.
Fig. 8 is a graph showing an example of increases in temperature of winding wires when the transformer 1 and the conventional transformer 101 are in operation.
Fig. 9 is a sectional view showing electrical connections between layers of the first winding wire 31 and layers of the second winding wire 32 in a transformer 1A according to Second Embodiment.
Fig. 10 is a sectional view showing an overall configuration of a transformer 1B according to Third Embodiment, and also showing electrical connections between layers of the first winding wire 31 and layers of the second winding wire 32.
Fig. 11 is a sectional view showing an overall configuration of a transformer 1C according to Fourth Embodiment.
Fig. 12 is a sectional view showing electrical connections between layers of the first winding wire 31 in the transformer 1C.

### [Description of Embodiments]

Hereinafter, some embodiments of the present invention are described with reference to the drawings.

### <First Embodiment>

### 1.1 Schematic Configuration

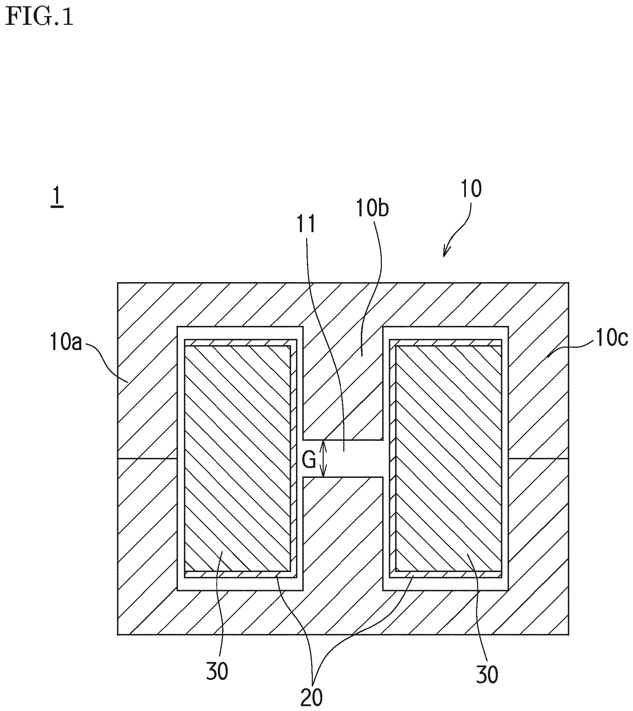

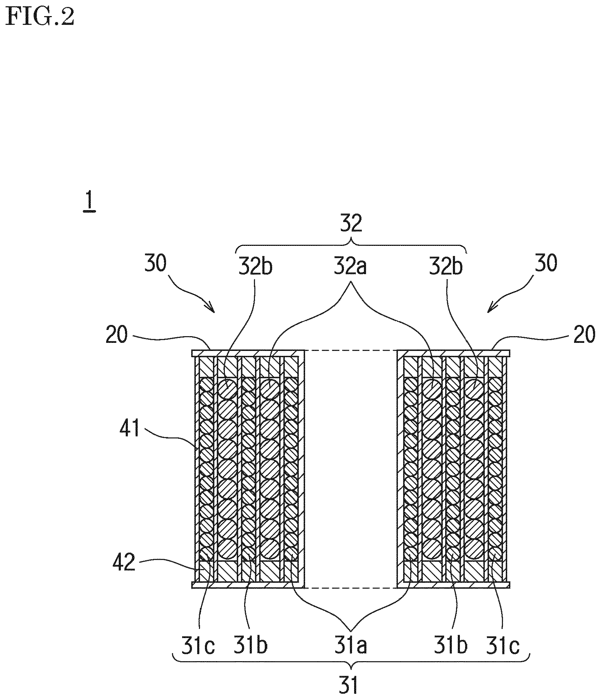

Fig. 1 is a sectional view showing an overall configuration of a transformer 1 according to First Embodiment. Fig. 2 is a sectional view showing a winding wire part 30 of the transformer 1 in detail.

As shown in Fig. 1, a transformer 1 has a core 10 configured to form a magnetic circuit and including a gap 11 in a middle leg 10b thereof, a bobbin (a winding frame) 20 mounted on the middle leg 10b of the core 10, and a winding wire part 30 wound on the bobbin 20 in multiple separate layers.

The core 10 has a middle leg 10b and two outer legs 10a, 10c (where necessary, distinguished as a left leg 10a and a right leg 10c) that branch off from the middle leg 10b. A gap 11 is formed in the middle leg 10b. The gap 11 serves to prevent magnetic saturation of the core 10 and to control magnetizing inductance of the transformer 1. The gap 11 may not be necessarily formed in the middle leg 10b.

The core 10 may be an assembly of, for example, two E-shaped cores. In this case, middle leg portions of the E-shaped cores should be short enough to leave the length of a clearance G of the gap 11. For example, the outer leg portions of both E-shaped cores may be shortened by half the length of the gap clearance G, or the outer leg portion of either one E-shaped core may be shortened by the length of the gap clearance G. The core 10 is made of a commonly used material.

As shown in Fig. 2, layers of a first winding wire 31 and layers of a second winding wire 32 are electrically insulated and alternately wound on the bobbin 20 in a laminated manner. Specifically, layers of the winding wires are wound on the bobbin 20 in the following order from inside (from the closest side to the gap 11).
1) Layer 31a of the first winding wire 31
2) Layer 32a of the second winding wire 32
3) Layer 31b of the first winding wire 31
4) Layer 32b of the second winding wire 32
5) Layer 31c of the first winding wire 31

Note that this arrangement is a mere example. The total layers are not limited to five layers including three layers of the first winding wire 31 and two layers of the second winding wire 32. In the first winding wire 31 of the above-mentioned arrangement, the layer 31a closest to the gap 11 corresponds to "a first layer of the first winding wire" in the present invention, and the layer 31b second closest to the gap 11 corresponds to "a second layer of the first winding wire" in the present invention. In the second winding wire 32 of the above-mentioned arrangement, the layer 32a corresponds to "a first layer of the second winding wire" in the present invention. The first winding wire 31 and the second winding wire 32 correspond to the primary side/the secondary side or the secondary side/the primary side of, for example, a power converter.

An insulating tape (an insulating member) 41 is applied between the layers of the first winding wire 31 and the layers of the second winding wire 32 in order to prevent dielectric breakdown. A protection tape (an insulating member) 42 is further applied to both ends of the winding wires in each layer in order to prevent dielectric breakdown between adjacent layers. The insulating tape 41 and the protection tape 42 are different kinds of tape in practice, but may be the same kind of tape.

In the transformer 1, the degree of coupling between the first winding wire 31 and the second winding wire 32 is indicated by a coupling coefficient from 0 to 1. When the amount of leakage flux is less, the coupling coefficient gets closer to 1. Since the layers of the first winding wire 31 and the layers of the second winding wire 32 are wound alternately, it is possible to reduce the proximity effect that occurs between the layers of the same winding wire and to reduce a loss in the winding wire. In addition, this arrangement increases the coupling coefficient (reduces the leakage inductance)in the transformer 1, so that a power converter that employs the transformer 1 can be more efficient depending on its circuit configuration.

### 1.2 Electrical connections between the first winding wire 31 and the second winding wire 32

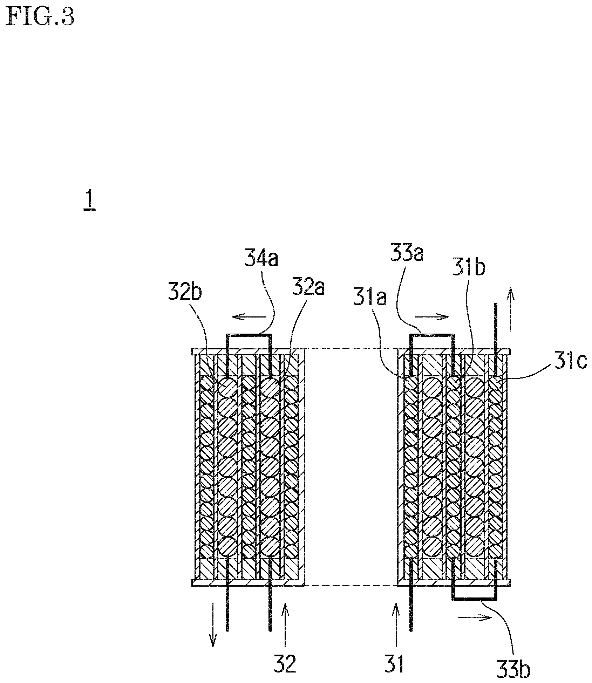

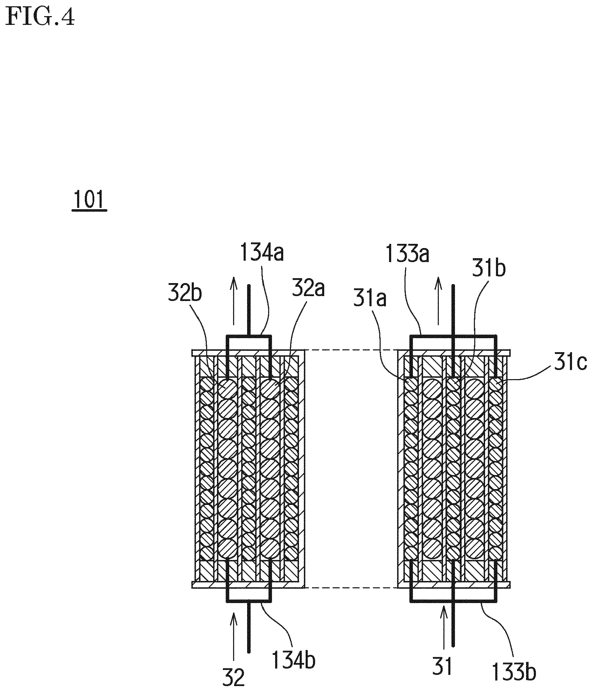

Fig. 3 is a sectional view showing electrical connections between layers of the first winding wire 31 and layers of the second winding wire 32 in the transformer 1. Fig. 4 is a sectional view showing electrical connections between layers of the first winding wire 31 and layers of the second winding wire 32 in a conventional transformer 101.

In the transformer 1 shown in Fig. 3, the layers (the layer 31a, the layer 31b and the layer 31c) of the first winding wire 31 are connected in series (see on the right side in Fig. 3), and the layers (the layer 32a and the layer 32b) of the second winding wire 32 are also connected in series (see on the left side in Fig. 3).

Specifically, in the first winding wire 31, an end of the layer 31a (the upper end in Fig. 3) and an end of the layer 31b (the upper end in Fig. 3) are connected via a connecting wire 33a for the first winding wire, and the other end of the layer 31b (the lower end in Fig. 3) and an end of the layer 31c (the lower end in Fig. 3) are connected via a connecting wire 33b. In the second winding wire 32, an end of the layer 32a (the upper end in Fig. 3) and an end of the layer 32b (the upper end in Fig. 3) are connected via a connecting wire 34a for the second winding wire.

On the other hand, in the conventional transformer 101 shown in Fig. 4, the layers of the first winding wire 31 are connected in parallel via a connecting wire 133a and a connecting wire 133b for the first winding wire (see the right side in Fig. 4), and the layers of the second winding wire 32 are also connected in parallel via a connecting wire 134a and a connecting wire 134b for the second winding wire (see on the left side in Fig. 4).

Despite the above difference, the electric resistance across the entire first winding wire 31 and the electric resistance across the second winding wire 32 in the transformer 1 are preferably equivalent to those in the conventional transformer 101. For this purpose, the first winding wire 31 and the second winding wire 32 in the transformer 1 may be composed of, for example, thicker wire rods. Specifically, the three-layer first winding wire 31 may be composed of a wire rod whose electric resistance is one-third of the electric resistance per unit length, and the two-layer second winding wire 32 may be composed of a wire rod whose electric resistance is a half of the electric resistance per unit length.

### 1.3 Influence of leakage flux Φ from the gap 11

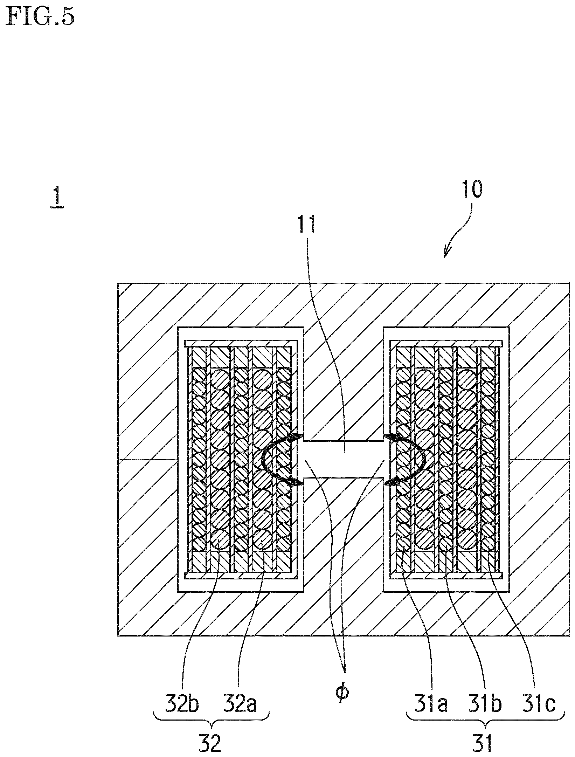

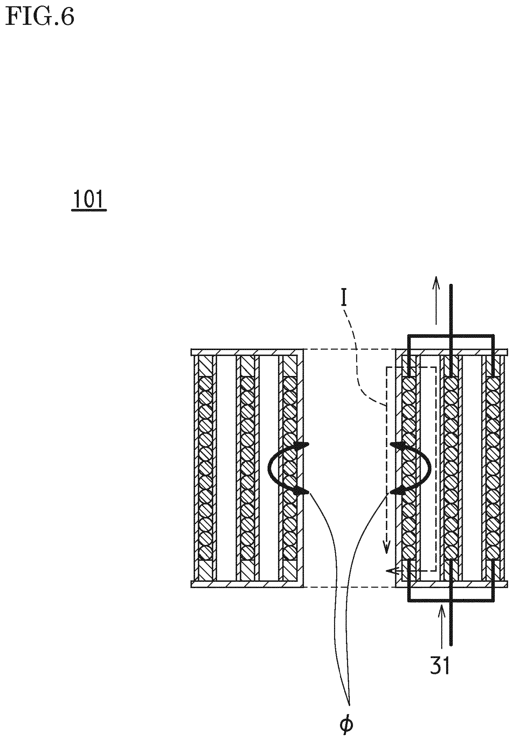

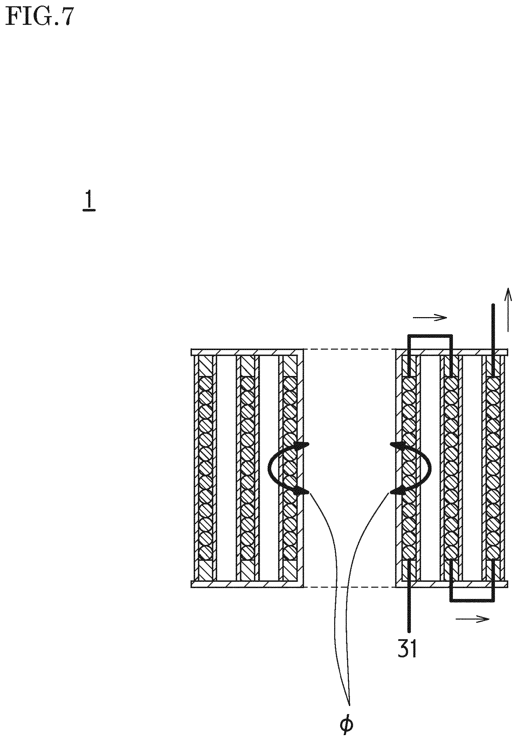

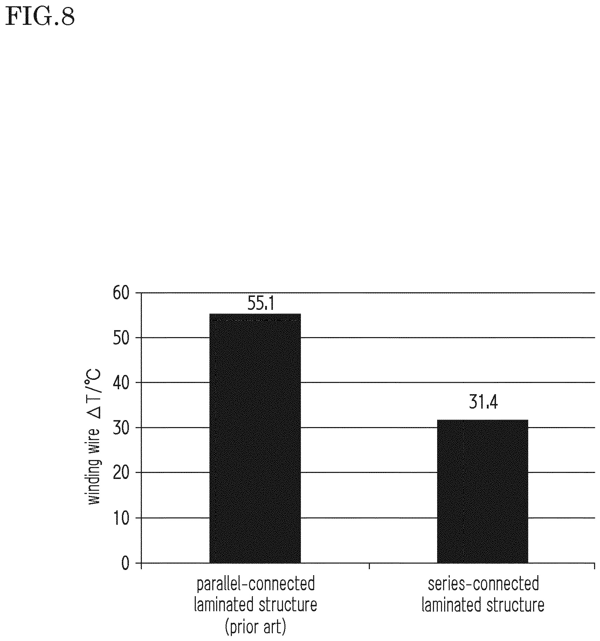

Fig. 5 is a sectional view showing an example of leakage flux Φ from the gap 11 in the transformer 1. Fig. 6 is a sectional view showing an example of an influence by leakage flux Φ in the conventional transformer 101. Fig. 7 is a sectional view showing an example of an influence by the leakage flux Φ in the transformer 1. Fig. 8 is a graph showing an example of increases in temperature of winding wires when the transformer 1 and the conventional transformer 101 are in operation. Note that the second winding wire 32 is omitted in Figs. 6 and Fig. 7.

When the transformer 1 is in operation, leakage flux Φ flows from the gap (air gap) 11 formed in the core 10, as shown in Fig. 5. If the gap 11 is so large, the leakage flux Φ reaches the first winding wire 31 and the second winding wire 32 and changes the magnetic flux between the layers of these winding wires.

In the conventional transformer 101, the layers of the first winding wire 31 and the layers of the second winding wire 32 are connected in parallel. As shown in Fig. 6, when the leakage flux Φ interlinks within the parallel-connected loop, an induced electromotive force is generated in the loop, and a loop current I flows through the loop. Although the electric current flowing through the layers should be uniform, the loop current I disturbs uniformity of the electric current, and a part of the winding wires generates heat due to an overcurrent.

On the other hand, in the transformer 1 according to First Embodiment, the layers of the first winding wire 31 are connected in series, and the layers of the second winding wire 32 are also connected in series. As shown in Fig. 7, even if the leakage flux Φ interlinks in these layers, inherent absence of a loop inhibits generation of any loop current I. Since no overcurrent is caused by any loop current I, the transformer 1 prevents abnormal heat generation in the winding wires.

The conventional transformer 101 and a prototype of the transformer 1 were operated under the same conditions to compare the increases in temperature of the winding wires. As indicated in Fig. 8, the temperature of the conventional transformer 101 rose to 55.1°C (the left bar in Fig. 8), but the temperature of the transformer 1 rose only to 31.4°C (the right bar in Fig. 8). This result confirms that the transformer 1 in which the first winding wire 31 and the second winding wire 32 are laminated and connected in series can significantly suppress an increase in temperature.

According to First Embodiment as above, the loop current I is not generated even if the leakage flux Φ from the gap 11 interlinks with the magnetic flux of the first winding wire 31 and the second winding wire 32. Hence, the transformer 1 can avoid an overcurrent due to a loop current I, and can eventually prevent abnormal heat generation in the first winding wire 31 and the second winding wire 32.

### <Second Embodiment>

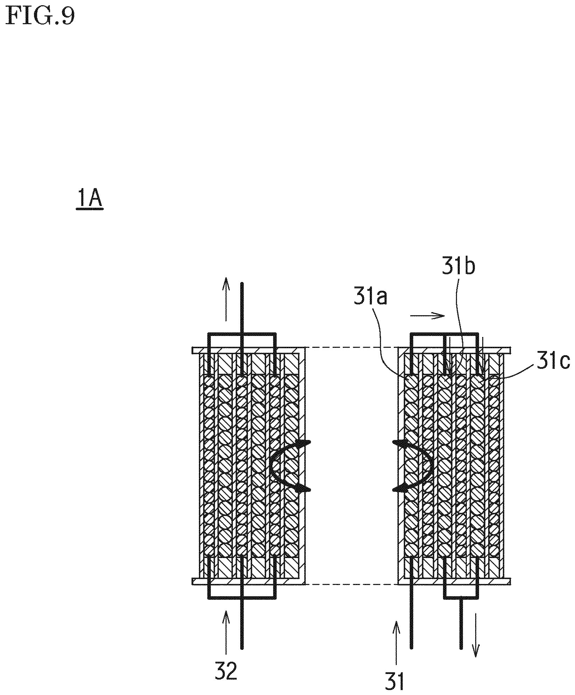

Fig. 9 is a sectional view showing electrical connections between layers of the first winding wire 31 and layers of the second winding wire 32 in a transformer 1A according to Second Embodiment. The following description focuses on differences from First Embodiment, and uses the same reference signs for the same components as those used in First Embodiment.

In the transformer 1A shown in Fig. 9, the layer 31a and the layer 31b of the first winding wire 31 are connected in series, whereas the layer 31b and the layer 31c are connected in parallel. In other words, a specific layer of the first winding wire 31 (the layer 31b in the illustrated example) and one or more inner layers (layers closer to the gap 11) (only the layer 31a in the illustrated example) are connected in series, whereas the specific layer (the layer 31b) and one or more outer layers (layers farther away from the gap 11) (only the layer 31c in the illustrated example) are connected in parallel.

In the second winding wire 32, all layers (the layer 32a and the layer 32b) are connected in parallel. Alternatively, in the second winding wire 32, having three or more layers, a specific layer and one or more inner layers are connected in series, and the specific layer and one or more outer layers are connected in parallel, just like the first winding wire 31. This alternative embodiment of Fig.9 is an embodiment of the present invention.

According to Second Embodiment as above, series connection is limited to inner layers (layers close to the gap 11) that are susceptible to the leakage flux Φ from the gap 11. This is simpler than connecting all layers in series (see, for example, Fig. 3), but can still avoid the influence of the leakage flux Φ and can increase the coupling coefficient of the transformer 1A even more.

### <Third Embodiment>

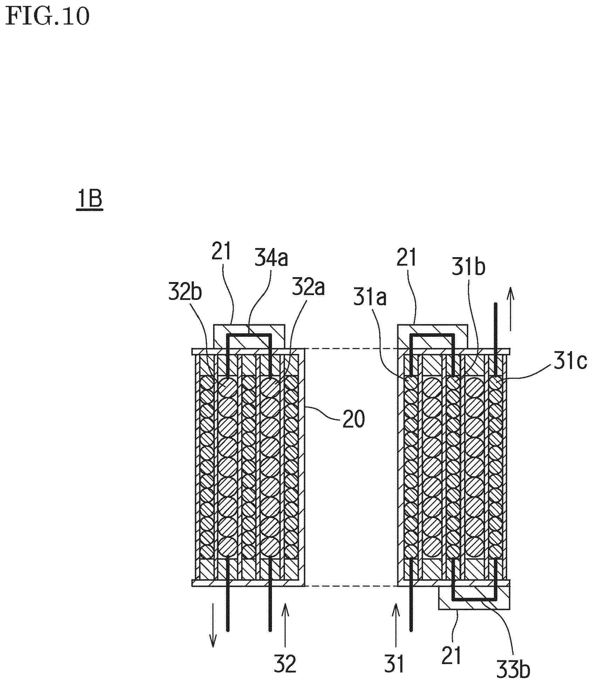

Fig. 10 is a sectional view showing an overall configuration of a transformer 1B according to Third Embodiment, and also showing electrical connections between layers of the first winding wire 31 and layers of the second winding wire 32. The following description focuses on differences from First Embodiment and Second Embodiment, and uses the same reference signs for the same components as those used in the foregoing embodiments.

As a manner of connecting the winding wires in series, winding wires may be wound separately for respective layers, and ends of these wires may be soldered or connected otherwise. This process, however, requires an additional connecting step.

In this embodiment, the bobbin 20 is provided with connecting wire holders 21 for holding the connecting wires that connect the layers in series. For example, grooves for accommodating the connecting wires may be formed in the bobbin 20.

In addition, the inlet and the outlet of the wire that connects the layers of the first winding wire 31 are positioned apart from the inlet and the outlet of the wire that connects the layers of the second winding wire 32 (separately on the left side and the right side in the illustrated example). The connecting wire holders 21 for the first winding wire 31 are also positioned apart from the connecting wire holder 21 for the second winding wire 32. This configuration can prevent dielectric breakdown across the first winding wire 31 and the second winding wire 32.

According to Third Embodiment as above, the layers can be wound alternately in series by a single winding wire. This embodiment can also prevent dielectric breakdown caused by mutual contact of the connecting wires.

### <Fourth Embodiment>

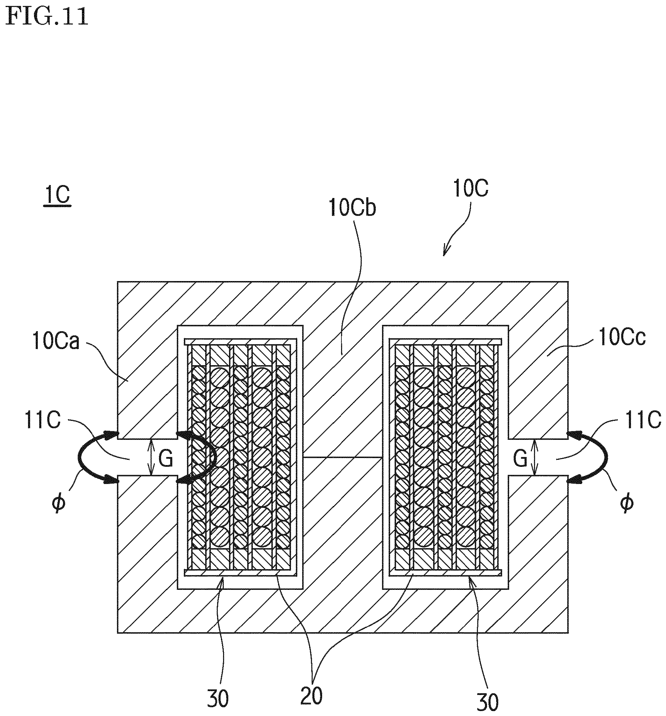

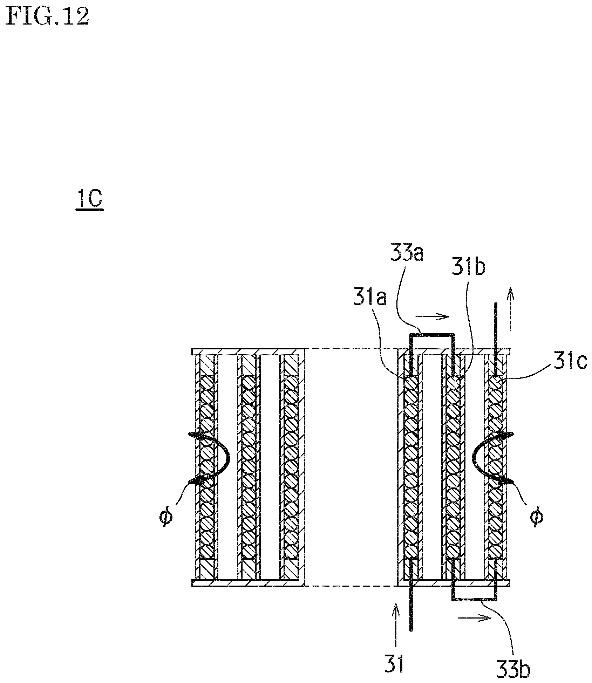

Fig. 11 is a sectional view showing an overall configuration of a transformer 1C according to Fourth Embodiment. Fig. 12 is a sectional view showing electrical connections between layers of the first winding wire 31 in the transformer 1C. The second winding wire 32 is omitted in Fig. 12. The following description focuses on differences from First to Third Embodiments, and uses the same reference signs for the same components as those used in the foregoing embodiments.

As shown in Fig. 11, a transformer 1C has a core 10C configured to form a magnetic circuit and including gaps 11C in two outer legs 10Ca, 10Cc thereof, a bobbin 20 mounted on a middle leg 10Cb of the core 10C, and a winding wire part 30 wound on the bobbin 20 in multiple separate layers.

In the transformer 1C shown in Fig. 12, the layers (the layer 31a, the layer 31b and the layer 31c) of the first winding wire 31 are connected in series. Specifically, an end of the layer 31a (the upper end in Fig. 12) and an end of the layer 31b (the upper end in Fig. 12) are connected via a connecting wire 33a, and the other end of the layer 31b (the lower end in Fig. 12) and an end of the layer 31c (the lower end in Fig. 12) are connected via a connecting wire 33b.

According to Fourth Embodiment as above, the loop current is not generated even if the leakage flux Φ from the gaps 11C in the outer legs 10Ca, 10Cc interlinks with the magnetic flux of the first winding wire 31. Hence, the transformer 1C can avoid an overcurrent due to a loop current, and can eventually prevent abnormal heat generation in the first winding wire 31. The same applies to the second winding wire 32.

### <Fourth Embodiment, Modified Example>

Similar to Second Embodiment, series connection in the first winding wire 31, for example, may be limited to the connection of one or more layers (outer layers in the illustrated example) that are close to the gaps 11C and susceptible to the leakage flux Φ from the gaps 11C with a layer adjacent thereto. In this modified example, the layer 31c closest to the gaps 11C corresponds to "a first layer of the first winding wire", and the layer 31b second closest to the gaps 11C corresponds to "a second layer of the first winding wire".

Specifically, the layer 31c and the layer 31b of the first winding wire 31 are connected in series, whereas the layer 31b and the layer 31a are connected in parallel. In other words, a specific layer of the first winding wire 31 (the layer 31b in the illustrated example) and one or more layers closer to the gaps 11C than the specific layer (only the layer 31c in the illustrated example) are connected in series, whereas the specific layer (the layer 31b) and one or more layers farther away from the gaps 11C than the specific layer (only the layer 31a in the illustrated example) are connected in parallel.

According to the modified example of Fourth Embodiment as above, series connection is limited to the layers close to the gaps 11C (outer layers) that are susceptible to the leakage flux Φ from the gaps 11C. This is simpler than connecting all layers in series, but can still avoid the influence of the leakage flux Φ and can increase the coupling coefficient of the transformer 1C even more.

### <Other Embodiments>

Each of the transformer 1, the transformer 1A, the transformer 1B, and the transformer 1C may be applied to a power converter such as an insulated converter. The resulting power converter can operate in a wide input-output voltage range.

The present invention can be embodied and practiced in other different forms without departing from the gist and essential characteristics of the present invention. Therefore, the above-described embodiments and examples are considered in all respects as illustrative and not restrictive. The scope of the invention is indicated by the appended claims rather than by the foregoing description. All variations and modifications falling within the scope of the appended claims are intended to be embraced therein.

The present application claims priority to Japanese Patent Application No. 2016-200694, filed on October 12, 2016.

### [Reference Signs List]

- 1: transformer
- 1A: transformer
- 1B: transformer
- 1C: transformer
- 10: core
- 10a: outer leg (left leg)
- 10b: middle leg
- 10c: outer leg (right leg)
- 10C: core
- 11: gap
- 11C: gap
- 20: bobbin
- 21: connecting wire holder
- 30: winding wire part
- 31: first winding wire
- 32: second winding wire
- 33a: connecting wire
- 33b: connecting wire
- 34a: connecting wire
- 41: insulating tape
- 42: protection tape
- 101: transformer (prior art)

## Claims

1. A transformer (1) comprising:
a core (10) configured to form a magnetic circuit and including an air gap (11) in at least a part of the core (10);
a bobbin (20) mounted on the core (10);
a primary winding wire (31) that is wound on the bobbin (20) in more than two separate layers including a first layer (31a) of the primary winding wire (31) closest to the air gap (11) and a second layer (31b) of the primary winding wire (31) farther away from the gap (11) than the first layer (31a); and
a secondary winding wire (32) insulated from the primary winding wire (31), and including a first layer (32a) of the secondary winding wire (32) wound between the first layer (31a) of the primary winding wire (31) and the second layer (31b) of the primary winding wire (31),
wherein the first layer (31a) of the primary winding wire (31) and the second layer (31b) of the primary winding wire (31) are connected in series;
wherein the secondary winding wire (32) is also wound in more than two separate layers,
wherein the layers of the primary winding wire (31) and the layers of the secondary winding wire (32) are alternately laminated on the bobbin (20),
**characterised in that** in the primary winding wire (31), a specific layer of the primary winding wire (31) and one or more layers closer to the air gap (11) than the specific layer are connected in series, and the specific layer of the primary winding wire (31) and one or more layers farther away from the air gap (11) than the specific layer are connected in parallel,
wherein, also in the secondary winding wire (32), a specific layer of the secondary winding wire (32) and one or more layers closer to the air gap (11) than the specific layer are connected in series, and the specific layer of the secondary winding wire (32) and one or more layers farther away from the air gap (11) than the specific layer are connected in parallel.

2. The transformer (1) according to claim 1,
wherein the bobbin (20) is provided with a winding wire holder (21) configured to hold a series connecting wire for connecting the layers of the primary winding wire (31) in series or connecting the layers of the secondary winding wire (32) in series.

3. The transformer (1) according to claim 1 or 2,
wherein an inlet wire and an outlet wire that connect the layers of the primary winding wire (31) are positioned apart from an inlet wire and an outlet wire that connect the layers of the secondary winding wire (32).

4. A power converter comprising the transformer (1) according to any one of claims 1 to 3.

## Patentansprüche

1. Transformator, umfassend:
einen Kern (10), der eingerichtet ist, einen magnetischen Kreis auszubilden und der einen Luftspalt (11) in zumindest einem Teil des Kerns (10) aufweist;
einen Spulenkörper (20), der auf dem Kern (10) montiert ist;
einen primären Wicklungsdraht (31), der auf dem Spulenkörper (20) in mehr als zwei getrennten Lagen, aufweisend eine erste Lage (31a) des primären Wicklungsdrahtes (31), die dem Luftspalt (11) am nächsten ist, und eine zweite Lage (31b) des primären Wicklungsdrahtes (31), die weiter von dem Spalt (11) entfernt ist als die erste Lage (31a), gewickelt ist; und
einen sekundären Wicklungsdraht (32), der von dem primären Wicklungsdraht (31) isoliert ist und eine erste Lage (32a) des sekundären Wicklungsdrahtes (32) aufweist, die zwischen der ersten Lage (31a) des primären Wicklungsdrahtes (31) und der zweiten Lage (31b) des primären Wicklungsdrahtes (31) gewickelt ist,
wobei die erste Lage (31a) des primären Wicklungsdrahtes (31) und die zweite Lage (31b) des primären Wicklungsdrahtes (31) in Reihe geschaltet sind;
wobei der sekundäre Wicklungsdraht (32) auch in mehr als zwei getrennten Lagen gewickelt ist,
wobei die Lagen des primären Wicklungsdrahtes (31) und die Lagen des sekundären Wicklungsdrahtes (32) abwechselnd auf dem Spulenkörper (20) geschichtet sind,
**dadurch gekennzeichnet, dass**
in dem primären Wicklungsdraht (31) eine spezifische Lage des primären Wicklungsdrahtes (31) und eine oder mehrere Lagen, die näher an dem Luftspalt (11) als die spezifische Lage sind, in Reihe geschaltet sind, und die spezifische Lage des primären Wicklungsdrahtes (31) und eine oder mehrere Lagen, die weiter von dem Luftspalt (11) entfernt sind als die spezifische Lage, parallel geschaltet sind,
wobei auch in dem sekundären Wicklungsdraht (32) eine spezifische Lage des sekundären Wicklungsdrahtes (32) und eine oder mehrere Lagen, die näher an dem Luftspalt (11) als die spezifische Lage sind, in Reihe geschaltet sind, und die spezifische Lage des sekundären Wicklungsdrahtes (32) und eine oder mehrere Lagen, die weiter von dem Luftspalt (11) entfernt sind als die spezifische Lage, parallel geschaltet sind.

2. Transformator (1) nach Anspruch 1,
wobei der Spulenkörper (20) mit einer Wicklungsdraht-Halterung (21) versehen ist, die eingerichtet ist, einen Reihenverbindungsdraht zum Verbinden der Lagen des primären Wicklungsdrahtes (31) in Reihe oder zum Verbinden der Lagen des sekundären Wicklungsdrahtes (32) in Reihe, zu halten.

3. Transformator (1) nach Anspruch 1 oder 2,
wobei ein Eingangsdraht und ein Ausgangsdraht, welche die Lagen des primären Wicklungsdrahtes (31) verbinden, getrennt von einem Eingangsdraht und einem Ausgangsdraht, welche die Lagen des sekundären Wicklungsdrahtes (32) verbinden, positioniert sind.

4. Energiewandler, umfassend den Transformator (1) nach einem der Ansprüche 1 bis 3.

## Revendications

1. Transformateur (1) comprenant :
un noyau (10) configuré pour former un circuit magnétique et comprenant un entrefer d'air (11) dans au moins une partie du noyau (10) ;
une bobine (20) montée sur le noyau (10) ;
un fil d'enroulement primaire (31) qui est enroulé sur la bobine (20) en plus de deux couches séparées comprenant une première couche (31a) du fil d'enroulement primaire (31) la plus proche de l'entrefer d'air (11) et une seconde couche (31b) du fil d'enroulement primaire (31) plus éloignée de l'entrefer d'air (11) que la première couche (31a) ; et
un fil d'enroulement secondaire (32) isolé du fil d'enroulement primaire (31), comprenant une première couche (32a) du fil d'enroulement secondaire (32) enroulée entre la première couche (31a) du fil d'enroulement primaire (31) et la seconde couche (31b) du fil d'enroulement primaire (31),
dans lequel la première couche (31a) du fil d'enroulement primaire (31) et la seconde couche (31b) du fil d'enroulement primaire (31) sont connectées en série ;
dans lequel le fil d'enroulement secondaire (32) est également enroulé en plus de deux couches séparées,
dans lequel les couches du fil d'enroulement primaire (31) et les couches du fil d'enroulement secondaire (32) sont laminées alternativement sur la bobine (20), **caractérisé en ce que**
dans le fil d'enroulement primaire (31), une couche spécifique du fil d'enroulement primaire (31) et une ou plusieurs couches plus proches de l'entrefer d'air (11) que la couche spécifique sont connectées en série, et la couche spécifique du fil d'enroulement primaire (31) et une ou plusieurs couches plus éloignées de l'entrefer d'air (11) que la couche spécifique sont connectées en parallèle,
dans lequel, dans le fil d'enroulement secondaire (32) également, une couche spécifique du fil d'enroulement secondaire (32) et une ou plusieurs couches plus proches de l'entrefer d'air (11) que la couche spécifique sont connectées en série, et la couche spécifique du fil d'enroulement secondaire (32) et une ou plusieurs couches plus éloignées de l'entrefer d'air (11) que la couche spécifique sont connectées en parallèle.

2. Transformateur (1) selon la revendication 1,
dans laquelle la bobine (20) est munie d'un support de fil d'enroulement (21) configuré pour maintenir un fil de connexion en série pour connecter les couches du fil d'enroulement primaire (31) en série ou pour connecter les couches du fil d'enroulement secondaire (32) en série.

3. Transformateur (1) selon la revendication 1 ou 2,
dans lequel un fil d'entrée et un fil de sortie qui relient les couches du fil d'enroulement primaire (31) sont placés à distance d'un fil d'entrée et d'un fil de sortie qui relient les couches du fil d'enroulement secondaire (32).

4. Convertisseur de puissance comprenant le transformateur (1) selon l'une quelconque des revendications 1 à 3.
